(19) Europäisches Patentamt
European Patent Office
Office européen des brevets

(11) EP 3 553 105 A1

(12) **EUROPEAN PATENT APPLICATION**

(43) Date of publication:
**16.10.2019 Bulletin 2019/42**

(21) Application number: **18166612.4**

(22) Date of filing: **10.04.2018**

(51) Int Cl.:
***C08G 18/48*** *(2006.01)*
***C08G 18/76*** *(2006.01)*
***C08G 18/18*** *(2006.01)*
***C08G 18/32*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **A RIGID POLYURETHANE FOAM WITH LOW ODOR**

(57) The present invention relates to a rigid polyurethane foam and use thereof in automotive interiors. The polyurethane foam is prepared from a reaction system comprising the reaction components of polyisocyanate, polyether polyol, catalyst and water, in which the catalyst is N,N-dimethyl-N',N'-di(2-hydroxypropyl)-1,3-propanediamine. The rigid polyurethane foam according to the present invention has a desired low odor, while ensuring good physical properties, such as good mechanical strength and tensile strength.

EP 3 553 105 A1

## Description

### Technical Field

The present invention relates to a rigid polyurethane foam, a polyurethane composite panel and use thereof in automotive interiors.

### Background Art

It is known in the art that polyurethane foams can be used to make automotive interiors, such as sandwich structures for headliner covers, pillar covers, and the like. Nevertheless, with the rapid economic development, people's requirements on the comfortability of automobile accessories and furniture are increasing. Now, besides setting a higher standard on the physical properties of polyurethane products, the automotive industry normally requires the polyurethane products to have lower VOC emissions, low fogging, and low odor. However, there is a need for amine catalysts in the production of polyurethane foams, and better performing amine catalysts currently used, such as bis(2-dimethylaminoethyl)ether, N,N,N',N",N"-pentamethyldiethylenetriamine, N,N-dimethylcyclohexylamine and the like, all have a bad ammoniacal odor, which may make people come into contact with it feel unwell, or even affect human health. Thus, it is a well-known problem in the industry to reduce said odor.

U.S. Patent No. 4,957,944 A discloses the use of a hydroxylamine-based catalyst in the polyurethane foaming system to reduce the odor. However, this solution fails to optimize the combination of the catalyst and other starting materials to provide good physical properties and low odor for the polyurethane foam at the same time.

Chinese Patent No. CN100436500C discloses a process for producing a flexible polyurethane foam by the reaction of a polyol and a polyisocyanate in the presence of a catalyst and other auxiliaries and the like. These methods are characterized by not using tin-based catalysts. One of these methods comprises reacting a polyol and a polyisocyanate in the presence of a catalyst, in which (1) a polyether polyol containing in its chain at least 5% by weight of oxyethylene group, based on the total weight of the polyol, and a terminal secondary OH group is used as the polyol, (2) tolylene diisocyanate and/or a derivative thereof is used as the polyisocyanate, and (3) at least one, two or more members selected from a group of specific imidazole compounds are used as the catalyst, without using any tin-based catalyst.

Despite these disclosures, there is still an urgent need in the market for rigid polyurethane foams with higher quality, low odor, and excellent physical properties, to meet the demands of the automotive industry, the furniture industry and the like.

### Summary of the Invention

According to a first aspect of the present invention, there is provided a rigid polyurethane foam having > 50% by volume of openings, as measured according to DIN ISO 4590-86. The polyurethane foam can be prepared by reacting a reaction system comprising a polyisocyanate component A and a component B, in which the component B comprises:

BO) a polyether polyol having a functionality of from 2 to 4, and a hydroxyl number of from 20 to 600, preferably from 50 to 500, and particularly preferably from 300 to 400;

BX) N,N-dimethyl-N',N'-di(2-hydroxypropyl)-1,3-propanediamine; and

BY) water.

The polyisocyanate of component A comprises: A1) from 0 to 10% by weight, preferably from 0.1 to 8% by weight, of 2,2'-diphenylmethane diisocyanate, based on the component A; A2) from 0 to 30% by weight, preferably from 10 to 25% by weight, of 2,4'-diphenylmethane diisocyanate, based on the component A; and A3) from 25 to 75% by weight, preferably from 35 to 55% by weight, of 4,4'-diphenylmethane diisocyanate, based on the component A.

The polyether polyol component BO) according to the present invention comprises:

B1) a glycerol-initiated, PO- or EO-terminated polyether polyol having a functionality of from 2 to 4, and a hydroxyl number of from 20 to 50 mg KOH / g, preferably from 28 to 31 mg KOH / g;

B2) a glycerol-initiated, PO-terminated polyether polyol having a functionality of from 2 to 4, and a hydroxyl number of from 300 to 600 mg KOH / g, preferably from 350 to 400 mg KOH / g; and

B3) a propylene glycol-initiated, PO-terminated polyether polyol having a functionality of 2, and a hydroxyl number of from 200 to 500 mg KOH / g, preferably from 250 to 300 mg KOH / g.

The catalyst according to the present invention is N,N-dimethyl-N',N'-di-(2-hydroxypropyl)-1,3-propanediamine (CAS No. 63469-23-8), which is present in an amount of from 0.2 to 1.0% by weight, preferably from 0.4 to 0.6% by weight, and particularly preferably from 0.45 to 0.55% by weight, based on the component B.

The blowing agent according to the present invention is water, which is present in an amount of from 3.0 to 7.0% by weight, preferably from 4.0 to 6.0% by weight, and particularly preferably from 4.0 to 5.0% by weight, based on the component B.

The component B in the polyurethane reaction system according to the present invention can further comprise a surfactant, preferably silicone oil. The silicone oil can be present in an amount of from 0.1 to 2% by weight, preferably from 0.1 to 0.5% by weight, based on the component B.

The rigid polyurethane foam provided by the present invention has an average odor value of less than 300, preferably less than 250, and particularly preferably less than 210, as measured according to the VDA 270 standard by using the COSMOS XP 329 apparatus within one week of preparation.

Experimental results show the combination of the above preferred polyether polyols can be better adapted to the reaction system using the catalyst N,N-dimethyl-N',N'-di(2-hydroxypropyl)-1,3-propanediamine, so that the polyurethane foam obtained has a lower odor while showing satisfactory physical properties. Moreover, surprisingly, the specific content of the catalyst, water and surfactant etc. make the polyurethane foam achieves both excellent physical properties and low odor.

According to another aspect of the present invention, a polyurethane composite panel is provided. The composite panel comprises two facing layers and a polyurethane foam layer sandwiched between the two facing layers, in which the polyurethane foam has > 50% by volume of openings, as measured according to DIN ISO 4590-86. The polyurethane foam is obtainable by the reaction of a reaction system comprising:

a polyisocyanate component A;

a polyol component B, comprising:

BO) a polyether polyol having a functionality of 2-4, and a hydroxyl number of 20-600, preferably 50-500, particularly preferably 300-400;

BX) a catalyst that is N,N-dimethyl-N',N'-di(2-hydroxypropyl)-1,3-propanediamine; and

BY) a blowing agent that is water.

The polyisocyanate of the component A comprises: A1) from 0 to 10% by weight, preferably from 0.1 to 8% by weight, of 2,2'-diphenylmethane diisocyanate, based on the component A; A2) from 0 to 30% by weight, preferably from 10 to 25% by weight, of 2,4'-diphenylmethane diisocyanate, based on the component A; and A3) from 25 to 75% by weight, preferably from 35 to 55% by weight, of 4,4'-diphenylmethane diisocyanate, based on the component A.

The polyether polyol component BO) according to the present invention preferably comprises:

B1) a glycerol-initiated, PO- or EO-terminated polyether polyol having a functionality of from 2 to 4, and a hydroxyl number of from 20 to 50 mg KOH / g, preferably from 28 to 31 mg KOH / g;

B2) a glycerol-initiated, PO-terminated polyether polyol having a functionality of from 2 to 4, and a hydroxyl number of from 300 to 600 mg KOH / g, preferably from 350 to 400 mg KOH / g; and

B3) a propylene glycol-initiated, PO-terminated polyether polyol having a functionality of 2, and a hydroxyl number of from 200 to 500 mg KOH / g, preferably from 250 to 300 mg KOH / g.

The catalyst according to the present invention is N,N-dimethyl-N',N'-di-(2-hydroxypropyl)-1,3-propanediamine, which is present in an amount of from 0.2 to 1.0% by weight, preferably from 0.4 to 0.6% by weight, and particularly preferably from 0.45 to 0.55% by weight, based on the component B. The experimental results show that, where the catalyst is present in an amount of 0.2 to 1.0 wt. %, the foam obtained has very good physical properties and low odor.

The blowing agent according to the present invention is water, which is present in an amount of from 3.0 to 7.0% by weight, preferably from 4.0 to 6.0% by weight, and particularly preferably from 4.0 to 5.0% by weight, based on the component B.

The polyurethane reaction system according to the present invention can further comprise a surfactant, preferably silicone oil. The silicone oil can be present in an amount of from 0.1 to 2% by weight, and preferably from 0.1 to 0.5% by weight, based on the component B.

The materials of the two facing layers of the polyurethane composite panel according to the present invention can be selected from the group consisting of glass fibers, natural fibers, paper, thermoplastic films and non-woven fabrics.

According to yet another aspect of the present invention, there is provided a method for preparing the polyurethane composite panel, comprising the steps of: applying an adhesive onto the inner surfaces of the two facing layers or onto the surface of the polyurethane foam layer prepared in advance; placing the polyurethane foam between the two facing layers and then into a mold; and closing the mold at a temperature of 100-150°C for 30-50 seconds to produce the polyurethane composite panel.

According to a further aspect of the invention, there is provided the use of the aforementioned polyurethane foam or polyurethane composite panel in the manufacture of automotive interiors, particularly headliner covers, sunroof pull plates and pillar covers.

According to a still further aspect of the present invention, there is provided an automotive interior made of the rigid polyurethane foam or polyurethane composite panel according to the present invention.

## Detailed Description of the Invention

The various aspects of the present invention will be described hereinbelow in detail.

### Components of the reaction system for preparing the polyurethane foam

### Polyisocyanate component

Any organic polyisocyanate can be used to prepare the rigid polyurethane foam according to the present invention, including aromatic, aliphatic and alicyclic polyisocyanates, and combinations thereof. The polyisocyanate can be represented by the general formula R(NCO)n, wherein R represents an aliphatic hydrocarbonyl group having 2 to 18 carbon atoms, an aromatic hydrocarbonyl group having 6 to 15 carbon atoms, and an araliphatic hydrocarbonyl group having 8 to 15 carbon atoms, and n = 2-4.

Suitable polyisocyanates include, but not limited to, vinylene diisocyanate, tetramethylene 1,4-diisocyanate, hexamethylene diisocyanate (HDI), dodecylene 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane 2,4-diisocyanate, perhydro-diphenylmethane 4,4-diisocyanate, phenylene 1,3-diisocyanate, phenylene 1,4-diisocyanate, stilbene 1,4-diisocyanate, 3,3-dimethyl 4,4-diphenyl diisocyanate, toluene-2,4-diisocyanate (TDI), toluene-2,6-diisocyanate (TDI), diphenylmethane-2,4'-diisocyanate (MDI) diphenylmethane-2,2'-diisocyanate (MDI), diphenylmethane-4,4'-diisocyanate (MDI), diphenylmethane diisocyanate and/or a mixture of diphenylmethane diisocyanate homologs with more rings, polyphenylmethane polyisocyanate (polymeric MDI), naphthylene-1,5-diisocyanate (NDI), their isomers, and any mixtures thereof with their isomers.

Suitable polyisocyanates also include the isocyanates modified with carbodiimides, allophanates, or isocyanates, preferably but not limited to, diphenylmethane diisocyanate, carbodiimide-modified diphenylmethane diisocyanate, their isomers, and any mixtures thereof with their isomers.

When used in the present invention, the polyisocyanates can include isocyanate dimers, trimers, tetramers, or combinations thereof.

In a preferred embodiment of the present invention, the polyisocyanate component is selected from polymeric MDI.

In a preferred embodiment of the present invention, the polyisocyanate component comprises: A1) from 0 to 10% by weight, preferably from 0.1 to 8% by weight, of 2,2'-diphenylmethane diisocyanate, based on the component A; A2) from 0 to 30% by weight, preferably from 10 to 25% by weight, of 2,4'-diphenylmethane diisocyanate, based on the component A; and A3) from 25 to 75% by weight, preferably from 35 to 55% by weight, of 4,4'-diphenylmethane diisocyanate, based on the component A.

The organic polyisocyanate according to the present invention has an NCO content of 20-33 wt.%, preferably 25-32 wt.%, and particularly preferably 30-32 wt.%, as measured according to GB/T 12009.4-2016.

The organic polyisocyanate can also be used in the form of polyisocyanate prepolymers. These polyisocyanate prepolymers can be obtained by reacting an excess of the above-mentioned organic polyisocyanate with a compound having at least two isocyanate-reactive groups at a temperature of, for example, 30 to 100°C, preferably about 80°C. The polyisocyanate prepolymers according to the present invention have an NCO content of 20-33 wt.%, and preferably 25-32 wt.%, as measured according to GB/T 12009.4-2016.

**Polyol component**

The polyol according to the present invention can be optionally a plurality of polyether polyols and/or mixtures thereof, in which at least one polyether polyol is a glycerol-initiated polyol. The polyether polyol has a functionality of from 2 to 4 and a hydroxyl number of from 20 to 600, preferably from 50 to 500, and particularly preferably from 300 to 400.

The polyether polyol can be prepared by known processes. Normally, during the preparation, ethylene oxide or propylene oxide is mixed with ethylene glycol, 1,2-propylene glycol, 1,3-propylene glycol, diethylene glycol, glycerol, trimethylolpropane, pentaerythritol, triethanolamine, toluenediamine, sorbitol, and sucrose, and glycerol or propylene glycol is used as an initiator.

In addition, the polyether polyol can also be prepared by reacting, in the presence of a catalyst, at least one alkylene oxide comprising an alkylene group having 2 to 4 carbon atoms with a compound having 2 to 8, preferably but not limited to 3-8, active hydrogen atoms, or other reactive compound(s).

Examples of the catalyst include alkali metal hydroxides, such as sodium hydroxide, potassium hydroxide, or alkali metal alkoxides, such as sodium methoxide, sodium ethoxide, potassium ethoxide or potassium isopropoxide.

Suitable alkylene oxides include, but not limited to, tetrahydrofuran, ethylene oxide, 1,2-propylene oxide, 1,2-butylene oxide, 2,3-butylene oxide, styrene oxide, and any mixtures thereof.

Suitable active hydrogen atom-containing compounds include polyhydric compounds, preferably but not limited to water, ethylene glycol, 1,2-propanediol, 1,3-propanediol, diethylene glycol, trimethylolpropane, and any mixture thereof, more preferably polyhydric alcohols, particularly trihydric or higher polyhydric alcohols, such as glycerol, trimethylolpropane, pentaerythritol, sorbitol and sucrose. Suitable active hydrogen atom-containing compounds also include, but not limited to, organic dicarboxylic acids, such as succinic acid, adipic acid, phthalic acid and terephthalic acid, or aromatic or aliphatic substituted diamines, such as ethylenediamine, diethylenetriamine, triethylenetetramine, propylenediamine, butanediamine, hexamethylenediamine or toluenediamine.

As used herein, the term "alkylene oxide compound" generally refers to a compound having the following formula (I):

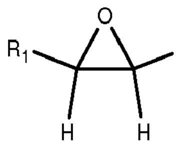

(I)

wherein $R_1$ and $R_2$ are independently selected from H, $C_1$-$C_6$ linear or branched alkyl groups, phenyl and substituted phenyl groups.

Preferably, $R_1$ and $R_2$ are independently selected from H, methyl, ethyl, propyl and phenyl.

The preparation of the "alkylene oxide compound" is known to a person skilled in the art. For example, it can be obtained by the oxidation reaction of olefin compounds.

Examples of alkylene oxide compounds suitable for use in the present invention include, but not limited to, ethylene oxide, propylene oxide, 1,2-butylene oxide, 2,3-butylene oxide, styrene oxide or mixtures thereof, with mixtures of ethylene oxide and propylene oxide being particularly preferred.

As used herein, the term "alkylene oxide compound" also covers oxacycloalkanes, examples of which include, but not limited to, tetrahydrofuran and oxetane.

As used herein, the term "amine" refers to a compound containing a primary amino group, a secondary amino group, a tertiary amino group, or a combination thereof. Examples of compounds suitable for use as the amine according to the present invention include, but not limited to, triethanolamine, ethylenediamine, toluenediamine, diethylenetriamine, triethylenetetramine and derivatives thereof, preferably ethylenediamine, toluenediamine, and particularly preferably toluenediamine.

The polyol component of the reaction system for preparing the polyurethane foam according to the present invention can comprise the following polyether polyols: B1) a glycerol-initiated, PO- or EO-terminated polyether polyol having a functionality of from 2 to 4, and a hydroxyl number of from 20 to 50 mg KOH / g, preferably from 28 to 31 mg KOH / g; B2) a glycerol-initiated, PO-terminated polyether polyol having a functionality of from 2 to 4, and a hydroxyl number of from 300 to 600 mg KOH / g, preferably from 350 to 400 mg KOH / g; and B3) a propylene glycol-initiated, PO-terminated polyether polyol having a functionality of 2, and a hydroxyl number of from 200 to 500 mg KOH / g, preferably from 250 to 300 mg KOH / g.

**Catalyst**

The catalyst according to the present invention is N,N-dimethyl-N',N'-di-(2-hydroxypropyl)-1,3-propanediamine

(CAS No. 63469-23-8). N,N-dimethyl-N',N'-di-(2-hydroxypropyl)-1,3-propanediamine is a reactive catalyst of hydroxy-containing tertiary amine type for polyurethane foam. It has the characteristics of low odor, and high activity, and can be widely used in the soft foam, semi-rigid foam and rigid foam industries. As is known to those skilled in the art, N,N-dimethyl-N',N'-di(2-hydroxypropyl)-1,3-propanediamine shows a higher activity and excellent cohesion capability in soft foam formulations, and its hydroxyl functional groups can react with NCO to become a part of the foam, avoiding the odor and VOC problems. In the present invention, the catalyst is present in an amount of from 0.2 to 1.0% by weight, preferably from 0.4 to 0.6% by weight, and particularly preferably from 0.45 to 0.55% by weight, based on the component B. Through countless experiments, we surprisingly found that where the catalyst is present in aforementioned content, the foam obtained has very good physical properties and low odor.

**Blowing agent**

The blowing agent used in the present invention is water. In the present invention, the water used as the blowing agent is present in an amount of from 3.0 to 7.0% by weight, preferably from 4.0 to 6.0% by weight, and particularly preferably from 4.0 to 5.0% by weight, based on the component B.

**Surfactant**

The surfactant used in the present invention preferably is silicone oil, i.e. allyl polyether polyol modified polydimethylsiloxane. The silicone oil is present in an amount of from 0.1 to 2% by weight, and preferably from 0.1 to 0.5% by weight, based on the component B.

Experimental results show the combination of the above preferred polyether polyols can be better adapted to the reaction system using the catalyst N,N-dimethyl-N',N'-di(2-hydroxypropyl)-1,3-propanediamine, so that the polyurethane foam obtained has a lower odor while showing satisfactory physical properties. Moreover, surprisingly, the specific content of the catalyst, water and surfactant etc. make the polyurethane foam achieves both excellent physical properties and low odor.

Unless otherwise defined, all technical and scientific terms used herein have the same meaning as commonly understood by one of ordinary skill in the art to which the invention pertains. Where the definition of a term set forth herein have a conflict with the meaning commonly understood by those skilled in the art to which the invention pertains, the definition set forth herein shall control.

Unless otherwise indicated, all values provided herein defining quantities of ingredients, reaction conditions, and so forth are to be understood as being modified by the term "about".

As used herein, the term "and/or" means one or all of the elements mentioned.

As used herein, the terms "comprising" and "including" cover both the situation where only the mentioned elements are present, and the situation where unmentioned elements are also present in addition to those mentioned.

Unless otherwise indicated, all percentages provided herein are expressed as percentage by weight.

The invention will be illustrated hereinbelow with reference to the examples, which should not be construed as a limitation to the present invention.

**Examples**

**Starting materials:**

Polyisocyanate (MDI) Desmodur 0589: purchased from Covestro (China) Co., Ltd. (mixing ratio of B/A materials is 100/160 (weight ratio));

Polyether polyols 1 and 2: purchased from Ninwu Company;

Polyether polyol 3: from Covestro (Taiwan) Co., Ltd.;

Catalysts Jeffcat DPA and Z130: from Huntsman Company;

Catalysts Naix EF-680 and C-15: from Momentive Company; and

Silicone oil surfactant Silicone A5 and Silicone A4: purchased from Shin-Etsu Chemical and Evonik, respectively.

**Testing methods:**

The functionality refers to a value determined according to the following formula used in the industry:

$$\text{functionality} = \text{hydroxyl value} * \text{molecular weight} / 56100$$

wherein the molecular weight is determined by GPC high performance liquid chromatography;
The core density refers to the density at the foam center, i.e. the density of the core of the molded foam, as determined according to ASTM D 1622-03 with overfilling in the mold used during the manufacture of the polyurethane foam composite sheet;
The hardness is determined by Asker CS;
The tensile strength and elongation at break are determined according to DIN-53455; and
COSMOS odor is determined according to the VDA 270 standard by using COSMOS XP 329 apparatus within one week of the preparation of the polyurethane foam.

**Example 1:**

160 parts by weight of MDI, 39, 29 and 20 parts by weight of polyether polyols 1, 2, and 3, respectively, 6.6 parts by weight of glycerol, 0.5 parts by weight of the catalyst, 0.4 parts by weight of silicone oil and 4.5 parts by weight of water were thoroughly mixed with stirring and then foamed, and the polyurethane foam of Example 1 was obtained.

**Example 2:**

The example was carried out as described in Example 1, except that the catalyst was used in an amount of 0.55, and the amount of glycerol used was reduced correspondingly.

**Example 3:**

The example was carried out as described in Example 1, except that the catalyst was used in an amount of 0.6, and the amount of glycerol used was reduced correspondingly.

**Comparative Examples 1-3:**

The comparative examples were carried out as described in Example 1, except that Jeffcat Z130, Naix EF-680 and C-15 were used, respectively, in an amount of 0.5 parts by weight as the catalyst.

**Table I - Examples and Comparative Examples**

| No. | Items name | Manufactor | Example 1 | Example 2 | Example 3 | Comparative Example A | Comparative Example B | Comparative Example C |
|---|---|---|---|---|---|---|---|---|
| 1 | Polyol al-1 | Ninwu | 39 | ← | ← | ← | ← | ← |
| 2 | Polyol al-2 | Ninwu | 29 | ← | ← | ← | ← | ← |
| 3 | Polyol al-3 | Covestro Taiwan | 20 | ← | ← | ← | ← | ← |
| 4 | Glycerin | Local | 6.6 | 6.55 | 6.5 | ← | ← | ← |
| 5 | Jeffcat DPA | Huntsman | 0.5 | 0.55 | 0.6 | | | |
| | Jeffcat Z130 | Huntsman | | | | 0.5 | | |
| | Naix EF-680 | Momentive | | | | | 0.5 | |
| | C-15 | Momentive | | | | | | 0.5 |
| 6 | Silicone A5 | Shin-Etsu chemical | 0.3 | ← | ← | ← | ← | ← |
| 7 | Silicone A4 | Evonik | 0.1 | ← | ← | ← | ← | ← |
| 8 | $H_2O$ | -- | 4.5 | ← | ← | ← | ← | ← |

**Table II - Comparison of test results**

| | | Example 1 | Example 2 | Example 3 | Comparative Example 1 | Comparative Example 2 | Comparative Example 3 |
|---|---|---|---|---|---|---|---|
| Stirring rate | rpm | 1700 | 1700 | 1700 | 1700 | 1700 | 1700 |
| Stirring time | s | 9 | 9 | 9 | 9 | 9 | 9 |
| Ambient temperature | °C | 23 | 23 | 21 | 23 | 22 | 22 |
| String time | s | 216 | 205 | 200 | 197 | 171 | 179 |
| Blow off time | s | 245 | 230 | 226 | 223 | 250 | 204 |
| Core density | Kg/m3 | 32.7 | 32.1 | 31.9 | 31.7 | 28.6 | 32.5 |
| Hardness | CS | 41.7 | 41.7 | 41.5 | 36.3 | 38.2 | 37.7 |
| Tensile Strength | Kpa | 291 | 263 | 274 | 232 | 204 | 236 |
| Elongation at break | % | 24.1 | 24.1 | 23 | 22.3 | 24.1 | 22 |
| VDA270 average value | | 3.5 | 3.5 | 3.5 | | | |
| COSMOS average value | | 192.3 | 204 | 208.3 | 279.7 | 409 | 286.7 |

As can be seen from the test results as shown in Table II, the foam obtained from the reaction system using N, N-dimethyl-N',N'-di(2-hydroxypropyl)-1,3-propanediamine and other components suitable for this catalyst shows better physical properties and lower odor comparing the reaction systems using other catalysts.

While the invention has been described hereinabove in detail for illustration, it is to be understood that such detailed description is merely exemplary and that the invention is not to be limited except as by the claims.

## Claims

**1.** A rigid polyurethane foam, having > 50% by volume of openings as measured according to DIN ISO 4590-86, obtainable by the reaction of a reaction system comprising:

a component A of polyisocyanate; and
a component B comprising:

BO) a polyether polyol having a functionality from 2 to 4, and a hydroxyl number from 20 to 600, preferably from 50 to 500 and particularly preferably from 300 to 400;
BX) N, N-dimethyl-N',N'-di(2-hydroxypropyl)-1,3-propanediamine; and
BY) water.

**2.** The rigid polyurethane foam according to claim 1, **characterized in that** the component A comprises:

A1) 0 to 10% by weight, preferably 0.1 to 8% by weight, of 2,2'-diphenylmethane diisocyanate, based on the component A;
A2) 10 to 30% by weight, preferably 15 to 25% by weight, of 2,4'-diphenylmethane diisocyanate, based on the component A; and
A3) 25 to 75% by weight, preferably 35 to 55% by weight, of 4,4'-diphenylmethane diisocyanate, based on the component A.

**3.** The rigid polyurethane foam according to claim 1, **characterized in that** the polyether polyol component BO) comprises:

B1) a glycerol-initiated, PO- or EO-terminated polyether polyol having a functionality of from 2 to 4, and a hydroxyl number of from 20 to 50 mg KOH / g, preferably from 28 to 31 mg KOH / g;
B2) a glycerol-initiated, PO-terminated polyether polyol having a functionality of from 2 to 4 and a hydroxyl number of from 300 to 600 mg KOH / g, preferably from 350 to 400 mg KOH / g; and
B3) a propylene glycol-initiated, PO-terminated polyether polyol having a functionality of 2, and a hydroxyl number of from 200 to 500 mg KOH / g, preferably from 250 to 300 mg KOH / g.

**4.** The rigid polyurethane foam according to any one of claims 1 to 3, **characterized in that** the N,N-dimethyl-N',N'-di(2-hydroxypropyl)-1,3-propanediamine is present in an amount of from 0.2 to 1.0% by weight, preferably from 0.4 to 0.6% by weight, and particularly preferably from 0.45 to 0.55% by weight, based on the component B.

**5.** The rigid polyurethane foam according to claim 1, **characterized in that** the water used as the blowing agent is present in an amount of from 3.0 to 7.0% by weight, preferably from 4.0 to 6.0% by weight, and particularly preferably from 4.0 to 5.0% by weight, based on the component B.

**6.** The rigid polyurethane foam according to any one of claims 1 to 3, **characterized in that** the polyurethane reaction system further comprises from 0.1 to 2% by weight, preferably from 0.1 to 0.5% by weight, of silicone oil, based on the component B.

**7.** The rigid polyurethane foam according to any one of claims 1 to 6, **characterized in that** the average odor value of the rigid polyurethane foam is below 300, preferably below 250, and particularly preferably below 210, as measured according to the VDA 270 standard by using the COSMOS XP 329 apparatus within one week of preparation.

**8.** A rigid polyurethane composite panel comprising two facing layers and a polyurethane foam layer sandwiched between the two facing layers, wherein the polyurethane foam has > 50% by volume of openings as measured according to DIN ISO 4590-86 and is obtainable by the reaction of a reaction system comprising:

a component A of polyisocyanate; and
a component B including:

BO) a polyether polyol having a functionality of from 2 to 4, and a hydroxyl number of from 20 to 600, preferably from 50 to 500 and particularly preferably from 300 to 400;
BX) N,N-dimethyl-N',N'-di(2-hydroxypropyl)-1,3-propanediamine; and
BY) water.

**9.** The polyurethane composite panel according to claim 8, **characterized in that** the catalyst is present in an amount of from 0.2 to 1.0% by weight, preferably from 0.4 to 0.6% by weight, particularly preferably from 0.45 to 0.55% by weight, based on the component B.

**10.** The polyurethane composite panel according to claim 8, **characterized in that** the materials of the two facing layers are independently selected from the group consisting of glass fibers, natural fibers, paper, thermoplastic films and non-woven fabrics.

**11.** A method for preparing the polyurethane composite panel according to any one of claims 8 to 10, comprising the steps of:

applying an adhesive onto the inner surfaces of the two facing layers or onto the surface of the polyurethane foam layer prepared in advance;
placing the polyurethane foam between the two facing layers and then into a mold; and
closing the mold at a temperature of 100-150°C for 30-50 seconds to produce the polyurethane composite panel.

**12.** Use of the rigid polyurethane foam according to any one of claims 1 to 7 in the manufacture of automotive interiors.

**13.** The use according to claim 12, **characterized in that** the rigid polyurethane foam is used for the applications of headliner covers, sunroof pull plates and pillar covers.

**14.** An automotive interior comprising the rigid polyurethane foam according to any one of claims 1 to 7.

Europäisches Patentamt
European Patent Office
Office européen des brevets

# EUROPEAN SEARCH REPORT

Application Number
EP 18 16 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 512 707 A2 (BASF AG [DE])<br>9 March 2005 (2005-03-09)<br>* page 7 - page 8; example 5; table 3 *<br>* page 6, paragraph [0054] *<br>* page 5, paragraph [0051] *<br>----- | 1,2,8,<br>10,12,14<br>3-7,9,<br>11,13 | INV.<br>C08G18/48<br>C08G18/76<br>C08G18/18<br>C08G18/32 |
| X<br>A | US 6 596 663 B1 (TAMANO YUTAKA [JP] ET AL)<br>22 July 2003 (2003-07-22)<br>* column 9 - column 12; example 3; tables 1-3 *<br>* column 8, line 25 - line 26 *<br>----- | 1,4-7,<br>12,14<br>8-11,13 | |
| X<br>Y | EP 2 159 240 A2 (BASF SE [DE])<br>3 March 2010 (2010-03-03)<br>* page 20, paragraph [0194] *<br>* page 23; example 5; table 3 *<br>* page 21, paragraph [0196] *<br>* page 20, paragraph [0192] - paragraph [0194] *<br>----- | 1-14<br>1-14 | |
| Y | DE 43 33 795 A1 (BASF AG [DE])<br>6 April 1995 (1995-04-06)<br>* page 6, line 48 - page 7, line 65; example 1; table 1 *<br>* page 6, line 46 - line 68 *<br>* page 6, line 45 - line 46 *<br>----- | 1-14 | TECHNICAL FIELDS SEARCHED (IPC)<br>C08G |
| X<br>Y | US 2016/046758 A1 (BOEHNKE LUTZ [DE] ET AL) 18 February 2016 (2016-02-18)<br>* claim 1 *<br>* comparative example 1; page 8 *<br>* page 8, line 18 - line 22 *<br>* page 6, line 25 - line 29 *<br>* page 7; example 1 *<br>-----<br>-/-- | 1-14<br>1-14 | |

The present search report has been drawn up for all claims

1

| Place of search | Date of completion of the search | Examiner |
|---|---|---|
| Munich | 29 August 2018 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 18 16 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 437 787 A1 (BAYER AG [DE]) 24 July 1991 (1991-07-24) * page 7; example 2 * * page 4, line 1 - line 19 * * page 6, line 40 - line 52 * * claim 1 * ----- | 1-14 | |

TECHNICAL FIELDS SEARCHED (IPC)

The present search report has been drawn up for all claims

1

| Place of search | Date of completion of the search | Examiner |
|---|---|---|
| Munich | 29 August 2018 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 16 6612

This annex lists the patent family members relating to the patent documents cited in the above-mentioned European search report. The members are as contained in the European Patent Office EDP file on
The European Patent Office is in no way liable for these particulars which are merely given for the purpose of information.

29-08-2018

| Patent document cited in search report | Publication date | Patent family member(s) | Publication date |
|---|---|---|---|
| EP 1512707 A2 | 09-03-2005 | AT 444318 T | 15-10-2009 |
| | | DE 10336938 A1 | 10-03-2005 |
| | | EP 1512707 A2 | 09-03-2005 |
| | | ES 2331473 T3 | 05-01-2010 |
| | | SI 1512707 T1 | 31-12-2009 |
| US 6596663 B1 | 22-07-2003 | DE 60005454 D1 | 30-10-2003 |
| | | DE 60005454 T2 | 22-07-2004 |
| | | EP 1092737 A2 | 18-04-2001 |
| | | ES 2208201 T3 | 16-06-2004 |
| | | US 6596663 B1 | 22-07-2003 |
| EP 2159240 A2 | 03-03-2010 | NONE | |
| DE 4333795 A1 | 06-04-1995 | NONE | |
| US 2016046758 A1 | 18-02-2016 | CN 105209512 A | 30-12-2015 |
| | | EP 2978787 A1 | 03-02-2016 |
| | | JP 6231186 B2 | 15-11-2017 |
| | | JP 2016514739 A | 23-05-2016 |
| | | US 2016046758 A1 | 18-02-2016 |
| | | WO 2014153701 A1 | 02-10-2014 |
| EP 0437787 A1 | 24-07-1991 | BR 9100208 A | 22-10-1991 |
| | | CA 2032737 A1 | 19-07-1991 |
| | | CS 9100101 A2 | 13-08-1991 |
| | | DE 4001249 A1 | 25-07-1991 |
| | | EP 0437787 A1 | 24-07-1991 |
| | | ES 2045739 T3 | 16-01-1994 |
| | | HU 209720 B | 28-10-1994 |
| | | JP 3013108 B2 | 28-02-2000 |
| | | JP H04211416 A | 03-08-1992 |
| | | RU 2031098 C1 | 20-03-1995 |
| | | US 5219893 A | 15-06-1993 |
| | | ZA 9100343 B | 30-10-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4957944 A
- CN 100436500 C
- GB 12009 T


### Non-patent literature cited in the description


- *CHEMICAL ABSTRACTS,* 63469-23-8